# EUROPEAN PATENT SPECIFICATION

(11) **EP 2 349 065 B1**
(45) Date of publication and mention of the grant of the patent: **01.01.2020**
(21) Application number: 09768430.2
(22) Date of filing: 02.11.2009
(51) Int. Cl.: A61C 8/00

(54) **INSERTION PART OF A TWO-PART IMPLANT WITH INSERTION INSTRUMENT**
EINFÜHRUNGSTEIL EINES ZWEITEILIGEN IMPLANTATS MIT EINFÜHRINSTRUMENT
PARTIE INSÉRABLE D'UN IMPLANT EN DEUX PARTIES AVEC INSTRUMENT D'INSERTION

(30) Priority: 05.11.2008 NL 1036155
(43) Date of publication of application: 03.08.2011
(73) Proprietor: White Implants Development Corp, 1043 GR Amsterdam (NL)
(72) Inventor: BEEKMANS, Rembardinus, NL-1063 BE Amsterdam (NL)
(74) Representative: Van Breda, Jacobus
(86) International application number: PCT/NL2009/000207
(87) International publication number: WO 2010/053352

(56) References cited:
- WO-A-2004/075769
- US-A1- 2004 029 075
- US-A1- 2008 032 263
- US-B1- 6 416 324
- US-B1- 6 488 501

## Description

The present invention relates to an insertion part and an insertion instrument according to the preamble of claim 1.

In dentistry, implants are used to replace missing teeth elements. This is carried out by drilling a cavity into the jawbone into which the implant is securely screwed or pressed. A dental prosthesis or crown is subsequently placed on the part of the implant that protrudes above the gums. Implants made of titanium have long yielded excellent results as far as durability and reliability are concerned.

However, just as in titanium implants, developments in zirconium oxide implants are tending toward two-part implants. A two-part implant allows the practitioner to choose. If the quality of the jawbone allows an insertion force of greater than 45 Ncm, the implant has sufficient primary stability to load it directly with a construction and a temporary arrangement. This is very important for patients on account of the aesthetic aspect in the replacement of front teeth.

US 6,416,324 B1 discloses an insertion part of a two part implant to be inserted into a jawbone. The insertion part itself has two separated parts that is a dental implant and a healing screw. The insertion part has at its coronal end two or more protrusions in the form of tines. The healing screw consists of two separate and distinct components: a shaft and a collar. The shaft of the collar to be fitted into the insertion part is made from a biocompatible metal such as titanium, while the collar is made from a biocompatible thermoplastic polymer. The male tines are suited for engagement with male projections, while the collar of the healing screw is present there between.

US 2008/0032263 A1 discloses a two part implant having a two-part insertion part comprising an implant member and an abutment member. A transfer key forms the insertion instrument which has axially outward extending projections to allow mating engagement with corresponding grooves of an abutment receiving portion on the implant member.

US 6,488,501 B1 discloses a transfer jig for a dental implant. The transfer jig comprises a post and a coping, which is detachable and attachable from the post by means of a snap fit. The post, which is conventionally formed of a metal such a titanium has a hexagonal portion at one end for location in a mating hexagonal socket of the dental implant. The post has a frusto-conical portion from which two diametrically opposite locating pins project. Before the transfer jig is fitted in the implant the locating pins are forced into keyhole slots outside the mouth of the patient. These slots are formed in the sidewall of a hollow cylindrical portion of the coping.

US 2004/0029075 A1 discloses implants produced from zirconia showing a good osteo-integration. This is described to allow simple manual immersion and control even by mere manual thrust and without special tools.

Now, a problem with zirconiumoxide implants is the brittle material which soon breaks in the case of an excessively high force and/or in the case of a disadvantageously distributed force.

Two-part titanium implants are brought into the jawbone by means of an insertion instrument which is fed into the cavity of the insertion part. The insertion instrument can in this case be operated manually or else be clamped in a drilling machine.

However, in the case of a zirconium-like insertion part" in particular in the case of insertion parts which have a cross section of 4 mm or less and are often used in the thin jawbone when replacing front teeth, the force which is exerted with an insertion instrument which is fed into the cavity is very soon too high. That is to say, the thin walls of a zirconium-like insertion part are unable to withstand, or have difficulty withstanding without breaking, the outwardly directed force which is for example greater than 30 Ncm. Furthermore, if the implantologist does not secure the instrument in an optimum position, i.e. perpendicularly "above the insertion part, during the insertion, the force is increased still further as a result of the leverage and also distributed disadvantageously over the walls of the insertion part, as a result of which the insertion part breaks at the level of the neck. Premature breaking during the insertion of an implant is much less common in one-part zirconium-like implants because such implants are not internally hollow or weakened by a different connecting geometry. These implants are brought into the jawbone by means of an all-encompassing sleeve-like instrument; this is slid over the implant.

WO 2004/075769 A2, used to delimit claim 1, discloses an insertion part 1 of an implant. The implant comprises a monobloc insertion implant and a tooth prosthesis to be fixed on top of a mounting assembly of the implant. The insertion part is to be inserted into a jawbone by an insertion instrument and is provided with several recesses, which are located at the coronal outside of said part and which are suited for engagement with corresponding protrusions located at the coronal outside of the insertion instrument.

The known dental implant system does not have the aforementioned advantages of a zirconium implant while meanwhile allowing for a misalignment of the insertion instrument and insertion part while maintaining the integrity of the implant.

The invention has as a goal to offer a two-part implant that has the advantages of a zirconium implant and yet allows for a misalignment of the insertion instrument and insertion part while maintaining the integrity of the implant.

This goal is realized by the insertion part and insertion instrument according to claim 1.

Such an implant system allows inserting a zirconium-like insertion part of a two-part implant into the jawbone at a high force of for example more than 30 Ncm. This is made possible by providing the insertion part with two or more protrusions at the outside which can be engaged by an insertion instrument with recesses in order in this way to bring the insertion part into the jawbone. The protrusions may be located anywhere at the outside of the insertion part.

Preferably, the protrusions are located just above the jawbone line of the insertion part, as a result of which the osseointegration is not disturbed and the patient is not prevented from practicing good oral hygiene.

Furthermore, the protrusions at the outside of the insertion part and the recesses of the insertion instrument which fit there over may be shaped in a broad range of ways.

Preference is given to protrusions of the insertion part which are round or oval-shaped which fit into the recesses of an insertion instrument. This allows the protrusions to be engaged in a sliding manner by the insertion instrument, as a result of which the implantologist can secure the insertion instrument in more positions while the desired direction of insertion of the insertion part into the jawbone is still maintained.

The insertion instrument with the recesses can in one embodiment be made suitable for clamping in a machine, which is used to bring the insertion part into the jawbone, but can also in one embodiment be made suitable as a hand-held instrument. The insertion instrument with recesses can also be shaped in a broad range of ways.

In the insertion part with protrusions, the neck of the insertion part is shaped spherically, so that a connection resembling a cardan coupling is produced during the placing of the sleeve-shaped insertion instrument on the protrusions of the insertion part. This way, resembling a cardan coupling, of engaging allows the insertion part, even if the insertion instrument is not being held in the optimum position, i.e. perpendicular above the insertion part, nevertheless to be brought into the jawbone in the desired direction of insertion.

The invention will be explained in greater detail hereinafter based on an exemplary embodiment with drawings.

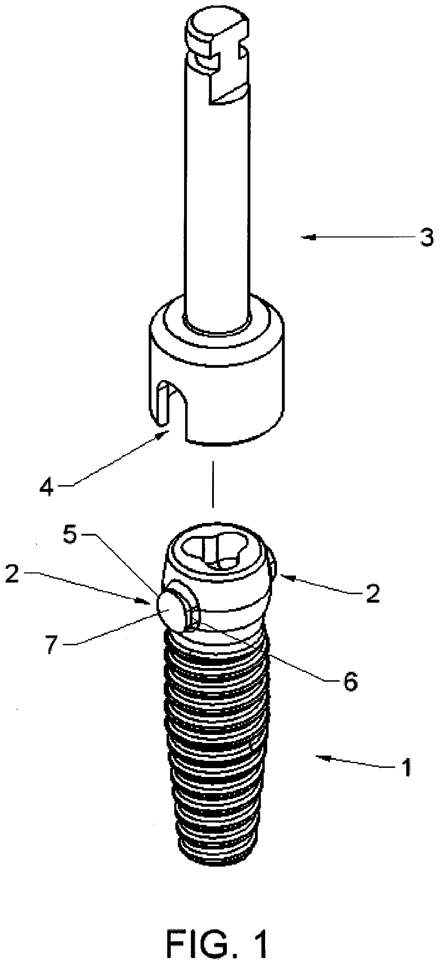

Fig. 1 shows an insertion part (1) with protrusions (2) which are round and/or oval-shaped (5) and of which the outsides are arched (6) and the upper rim is globular (7) with there above an insertion instrument (3) to be placed thereon with recesses (4).

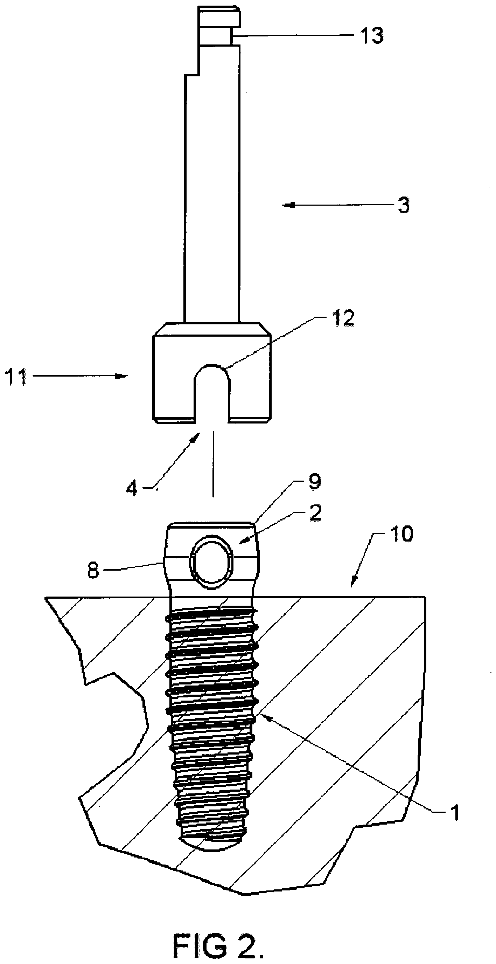

Fig. 2 shows a spherically shaped neck (8) of the insertion part (1) with a rounded-off upper edge (9) and a protrusion (2) just above the jawbone line (10). There above a sleeve-shaped (11) insertion instrument (3) with recesses (4) which are semicircular (12) at the upper rim and which has on the stem a notch (13) which serves for clamping in a machine.

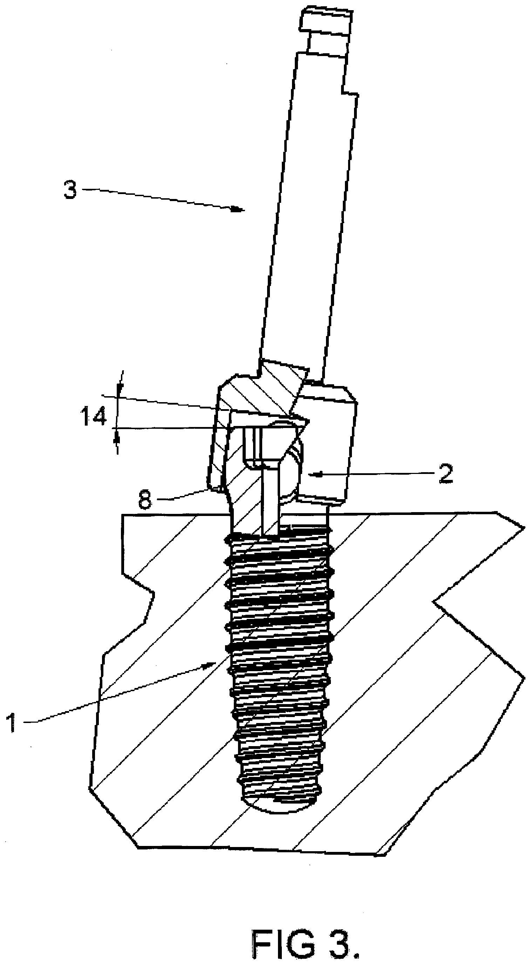

Fig. 3 shows an insertion instrument (3) placed on an insertion part (1) with a protrusion (2) which is partially cut away. The spherically shaped neck (8) and the connection (14) resembling a cardan coupling are shown here.

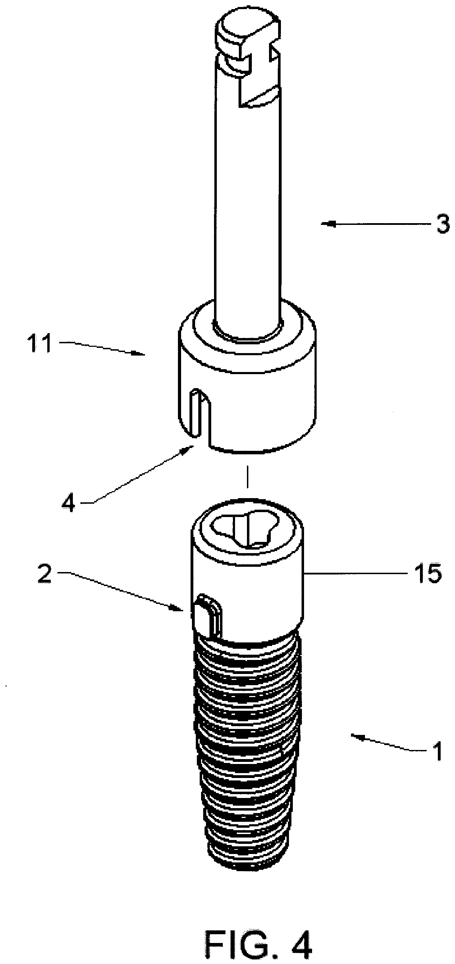

Fig. 4 shows an insertion part (1) with one of the protrusions (2), the neck being straight-shaped (15) with there above a fitting sleeve-shaped (11) insertion instrument (3) which is to be placed thereon with one of the recesses (4) .

## Claims

1. A two part dental implant insertion system, comprising an insertion part (1) of a two-part implant and an insertion instrument (3) being sleeve-shaped (11) at its upper rim, which insertion part (1) is to be inserted into a jawbone by the insertion instrument (3) by means of protrusions (2) engaging with recesses (4),
**characterized in that**:
a) the insertion part (1) is zirconium-like and is part of a two-part implant,
b) the insertion part (1) is provided with two or more protrusions (2), which are suited for engagement with the recesses (4) provided on the insertion instrument (3),
c) the insertion part (1) has a spherically-shaped neck (15) with a rounded-off upper edge (9),
d) the protrusions (2) of the insertion part (1) which are provided on the site of the neck (15) are round or oval-shaped (5), and
e) the insertion instrument (3) having its recesses (4) fitting over two or more protrusions (2) of the insertion part (1) allowing, by way of the sleeve-shaped (11) upper rim and the spherically shaped neck (8) of the insertion part (1), a connection (14) which acts as a cardan coupling.

2. Insertion part (1) and insertion instrument (3) according to claim 1, **characterized in that** the round or oval-shaped (5) protrusions (2) of the insertion part (1) have arched outsides (6).

3. Insertion part (1) and insertion instrument (3) according to claim 1 or 2, **characterized in that** the recesses (4) provided on the insertion instrument (3) are semicircular (12) at the upper rim.

4. Insertion part (1) and insertion instrument (3) according to one of the claims 1-3, **characterized in that** the insertion instrument (3) has a stem having a notch (13) which serves for clamping in a machine.

5. Insertion part (1) and insertion instrument (3) according to claim 4, **characterized in that** the insertion instrument (3) having the notch (13) is made suitable for manual operation.

## Patentansprüche

1. Zweiteiliges dentales Implantateinführungssystem, mit einem Einführungsteil (1) eines zweiteiligen Implantats und einem Einführungsinstrument (3), das eine Hülsenform (11) an seinem oberen Rand aufweist, wobei das Einführungsteil (1) durch das Einführungsinstrument (3) mittels Vorsprüngen (2), die in Ausnehmungen (4) eingreifen, in einen Kieferknochen einzuführen ist,
**dadurch gekennzeichnet, dass**:
a) das Einführungsteil (1) zirkoniumartig ist und ein Teil eines zweiteiligen Implantats ist,
b) das Einführungsteil (1) mit zwei oder mehreren Vorsprüngen (2) versehen ist, die zum Eingriff mit den auf dem Einführungsinstrument (3) vorgesehenen Ausnehmungen (4) geeignet sind,
c) das Einführungsteil (1) einen sphärisch geformten Hals (15) mit einem abgerundeten oberen Rand (9) aufweist,
d) die Vorsprünge (2) des Einführungsteils (1), die an der Stelle des Halses (15) vorgesehen sind, rund oder oval geformt (5) sind, und
e) die Ausnehmungen (4) des Einführungsinstruments (3) über zwei oder mehr Vorsprünge (2) des Einführungsteils (1) passen, wodurch, mittels des hülsenförmigen (11) oberen Rands und des sphärisch geformten Halses (8) des Einführungsteils (1), eine Verbindung (14) ermöglicht ist, die als eine Kardankupplung wirkt.

2. Einführungsteil (1) und Einführungsinstrument (3) nach Anspruch 1,
**dadurch gekennzeichnet, dass**
die rund oder oval geformten (5) Vorsprünge (2) des Einführungsteils (1) gewölbte Außenseiten (6) aufweisen.

3. Einführungsteil (1) und Einführungsinstrument (3) nach Anspruch 1 oder 2,
**dadurch gekennzeichnet, dass**
die Vorsprünge (4), die auf dem Einführungsinstrument (3) vorgesehen sind, an dem oberen Rand halbkreisförmig (12) sind.

4. Einführungsteil (1) und Einführungsinstrument (3) nach einem der Ansprüche 1 bis 3,
**dadurch gekennzeichnet, dass**
das Einführungsinstrument (3) einen Schaft aufweist, der eine Nut (13) aufweist, die zum Klemmen in einer Maschine dient.

5. Einführungsteil (1) und Einführungsinstrument (3) nach Anspruch 4,
**dadurch gekennzeichnet, dass**
das Einführungsinstrument (3), das die Nut (13) aufweist, für einen manuellen Betrieb geeignet ist.

## Revendications

1. Système d'insertion d'implant dentaire en deux parties, comprenant une partie d'insertion (1) d'un implant en deux parties et un instrument d'insertion (3) qui est en forme de manchon (11) à son rebord supérieur, laquelle partie d'insertion (1) étant destinée à être insérée dans une mâchoire par l'instrument d'insertion (3) à l'aide de saillies (2) venant en prise avec des cavités (4),
**caractérisé en ce que** :
a) la partie d'insertion (1) est du type zirconium et fait partie d'un implant en deux parties,
b) la partie d'insertion (1) comporte deux ou plus de deux saillies (2), qui sont appropriées pour venir en prise avec les cavités (4) réalisées sur l'instrument d'insertion (3),
c) la partie d'insertion (1) comporte un col de forme sphérique (15) avec un bord supérieur arrondi (9),
d) les saillies (2) de la partie d'insertion (1) qui sont disposées sur le site du col (15) sont de forme ronde ou ovale (5), et
e) l'instrument d'insertion (3) a ses cavités (4) qui s'adaptent sur deux ou plus de deux saillies (2) de la partie d'insertion (1), de façon à autoriser, à l'aide du rebord supérieur en forme de manchon (11) et du col de forme sphérique (8) de la partie d'insertion (1), une liaison (14) qui joue le rôle de couplage à cardan.

2. Partie d'insertion (1) et instrument d'insertion (3) selon la revendication 1, **caractérisés en ce que** les saillies (2) de forme ronde ou ovale (5) de la partie d'insertion (1) ont des extérieurs en arche (6).

3. Partie d'insertion (1) et instrument d'insertion (3) selon la revendication 1 ou 2, **caractérisés en ce que** les cavités (4) réalisées sur l'instrument d'insertion (3) sont semi-circulaires (12) au niveau du rebord supérieur.

4. Partie d'insertion (1) et instrument d'insertion (3) selon l'une des revendications 1 à 3, **caractérisés en ce que** l'instrument d'insertion (3) a une tige comportant une encoche (13) qui sert au serrage dans une machine.

5. Partie d'insertion (1) et instrument d'insertion (3) selon la revendication 4, **caractérisés en ce que** l'instrument d'insertion (3) comportant l'encoche (13) est rendu approprié pour un fonctionnement manuel.
